# EUROPEAN PATENT APPLICATION

(11) **EP 3 786 450 A1**
(43) Date of publication of application: **03.03.2021**
(21) Application number: 19193968.5
(22) Date of filing: 28.08.2019
(51) Int. Cl.: F03D 17/00, G06T 7/00

(54) **METHOD AND SYSTEM FOR MONITORING BLADES OF A WIND TURBINE**

(71) Applicant: Siemens Gamesa Renewable Energy A/S, 7330 Brande (DK)
(72) Inventor: Manjunatha, Vinay Kumar, 570008 Mysore (IN); Kavala, Venkateswara Rao, 560066 Whitefield (IN); Vadivel, Balasubramaniam, 635126 Hosur (IN)
(74) Representative: Aspacher, Karl-Georg

(57) **Abstract**

The invention describes a method for monitoring the blades (5) of a wind turbine (1), comprising the steps:
- providing a camera (10) facing the blades (5) of the wind turbine (1),
- capturing with the camera (10) a number of images (P) of a blade (5) while the blade (5) is in motion, wherein the camera (10) is adjusted and controlled such that each image (P) of the number of images (P) shows a predefined area of a blade (5) in a predefined area of the image (P).

The invention further describes a related system and a wind turbine.

## Description

The invention relates to a method and a system for monitoring blades of a wind turbine, especially for automated inspection of rotor blades and more specifically a blade leading edge erosion inspection of rotor blade surfaces of a wind turbine.

Wind turbine blades take damage from many different sources. Inspecting the condition of the blades can detect blade damage at earlier points in time and reduces the danger that the damage propagates through the rotor blade. This inspection should be performed as much as possible, since damages can occur anytime.

Currently, the wind industry uses Drones or ground based cameras as automated systems, however, often industrial climbers have to inspect the blades manually. The currently used techniques have in common that the rotor blades have to be stopped during inspection. In addition, blade inspections are expensive because at least one technician must be onsite at the wind turbine farm to perform the inspection or control the systems, e.g. the drone.

It is the object of the present invention to improve the monitoring of a blade, especially the inspection of the blades of a wind turbine.

This object is achieved by a method according to claim 1, a system according to claim 9 and a wind turbine according to claim 13.

A method according to the invention for monitoring the blades of a wind turbine, comprises the following steps:
- Providing a camera facing the blades of the wind turbine.

A normal camera would be sufficient, however, it is preferred to use a high resolution camera. It is generally not important how the camera is mounted as long as the camera is able to take photos of a blade of the wind turbine, however, it is preferred that the camera is mounted independently of the blades (i.e. the camera is not mechanically connected to the blades so that movement of the blades does not directly change the positioning of the camera).
- Capturing with the camera a number of images of a blade while the blade is in motion, wherein the camera is adjusted and controlled such that each image of the number of images shows a predefined area of a blade in a predefined area of the image. Thus, online monitoring of a blade is feasible, especially monitoring the leading edge of a blade.

Although it is possible, that only one single image is taken with the camera, it is preferred that at least one image is taken from every blade, or that multiple images are taken from a number of blades. It is important for the invention that the blade is in motion, since then the inspection of the blades has no "dead time" and the blades can be monitored during normal performance. This feature, that the blades are in motion during monitoring, is achieved in that the camera is adjusted and controlled such that each image of the number of images shows a predefined area of a blade in a predefined area of the image. This could e.g. be achieved by moving the camera accordingly or by triggering the camera accordingly.

The frequency of capturing images can be in an interval of one week (e.g. when there is a low wind condition) or in an interval of days or hours. The frequency should depend on the wind condition. For example, the method can be applied immediately after a storm to check, if blades have been damaged. An advantage of the invention is that impacts will be increased in annual energy production (AEP) due to monitoring during normal operation and by preventively correcting an eroded part of the blade (e.g. the leading edge).

A system according to the invention for monitoring the blades of a wind turbine comprises the following components:
- A camera mounted such that it faces the blades of the wind turbine. The camera is preferably mounted independently of the blades, i.e. the camera is not mechanically connected to the blades so that movement of the blades does not directly change the positioning of the camera.
- A control unit designed to control the camera to capture a number of images of a blade while the blade is in motion, wherein the camera is adjusted and controlled such that each image of the number of images shows a predefined area of a blade in a predefined area of the image. The control unit is preferably a control unit that "knows" the position of the blades. The control unit can be a control unit of the wind turbine, especially a yaw and/or pitch control system of the wind turbine. Thus, a preferred control unit comprises or is the yaw and/or pitch control system of the wind turbine. Depending on the use, the control unit can be positioned together with the camera and comprises means to measure the position of the blades, having the advantage that a closed system can be set up what can be carried to a wind turbine, mounted there and perform its service autonomously. Independent of the nature of the control unit, it is preferred that it triggers the camera at a point of time a blade reaches a certain predefined position.

A wind turbine according to the invention comprises a camera, wherein the wind turbine is designed to perform a method according to the invention and/or comprises a system according to the invention.

Some units or modules of the system mentioned above can be completely or partially realized as software modules running on a processor of a system (e.g. the control unit). A realization largely in the form of software modules can have the advantage that applications already installed on an existing system can be updated, with relatively little effort, to install and run these units of the present application. The object of the invention is also achieved by a computer program product with a computer program that is directly loadable into the memory of a system (e.g. its control unit), and which comprises program units to perform the steps of the inventive method when the program is executed by the system. In addition to the computer program, such a computer program product can also comprise further parts such as documentation and/or additional components, also hardware components such as a hardware key (dongle etc.) to facilitate access to the software.

It is clear that a program cannot carry out the step of providing a camera in the sense that a camera is physically provided. However, the provision of the camera according to an algorithm is establishing a data-connection with the camera. Thus, in a method for monitoring the blades of a wind turbine, an algorithm can be designed to provide a camera facing the blades of the wind turbine by establishing a data-connection with a suitable camera and preferably amending the position of a camera in order to face said blades.

A computer readable medium such as a memory stick, a hard-disk or other transportable or permanently-installed carrier can serve to transport and/or to store the executable parts of the computer program product so that these can be read from a processor unit of a system (e.g. its control unit). A processor unit can comprise one or more microprocessors or their equivalents.

Particularly advantageous embodiments and features of the invention are given by the dependent claims, as revealed in the following description. Features of different claim categories may be combined as appropriate to give further embodiments not described herein.

According to a preferred method, the camera captures an image of the leading edge of at least one blade of the wind turbine. Alternatively or additionally, other areas of the blade such as the trailing edge, the pressure side, the suction side or aero attachments on the blade could be shown on an image (i.e. the camera and/or a blade is controlled in that the predefined area is shown on the image). It is preferred to capture a series of pictures of all blades of the wind turbine, particularly preferably at several times (at definite points of time).

According to a preferred method, before capturing an image, the camera and/or the blade is positioned such that a predefined part of the blade is visible on the image. Thus, in the case a predefined area should be monitored, the camera and/or the blade is moved such that the camera is able to see the predefined area. For example, if the leading edge of the blades should be monitored, the camera and/or the blades are moved such that the camera can take pictures of the leading edges of the blades.

In a preferred embodiment, the camera is mounted on a motion-unit designed to move the camera, especially by a pan-tilt unit with two degrees of freedom (e.g. 360° pan, 180° tilt). The motion unit can comprise motors (e.g. servo motors) or other motion means to change the position/orientation of the camera and a control unit for controlling the motors. In a preferred embodiment, the pitch of a blade is changed such that the camera can see a predefined area of the blade shortly before the image is taken, e.g. shortly before the (turning) blade reaches the field of vision of the camera, held in the special position in the field of vision while the image is taken and the pitch is changed back to normal position after taking the image (or after leaving the field of vision). This has the advantage that the blade is only a very short time not in the optimal position for power production. In a downstream wind turbine, where the camera is mounted at the tower, the field of view would be there where there are tower-induced eddies so that the change of the pitch in the range of the field of view would have no grave influence on power production.

According to a preferred method, the positioning of the camera and/or the capturing of an image is triggered or controlled by a yaw and/or pitch control system of the wind turbine. With the term "yaw and/or pitch control system" it is meant a yaw (control) system, a pitch control system or a combined yaw and pitch control system. A yaw system controls the orientation of the wind turbine rotor towards the wind. A pitch control system controls the pitch of the blades of a wind turbine. It is preferred that the camera rotation motion is controlled by the yaw and/or pitch control system of the wind turbine. With the term "camera rotation motion", the case is meant where camera is fixed and takes pictures as defined by the control system at given intervals. Also the case is meant where the camera is moving along with a blade or in any other orientation and take the pictures as defined by the control system (or by any other means).

According to a preferred method, the camera captures an image while a predefined area of the blade, preferably the blade leading edge, is pitched to a predefined angle focusing on the camera, especially by a yaw and/or pitch control system of the wind turbine.

According to a preferred method, the camera is mounted and designed such that at least 30% span of the blade can be pictured with one image. Alternatively, the camera is preferably controlled such that at least a vertical camera motion is applied between two images, wherein the vertical motion is preferably applied such that at last 30% span of a blade can be captured with a number of images. The value of at least 30% means that 30% should be the minimum. It is preferred that pictured span of the blade is at least 50% or at least 70%.

According to a preferred method, in an additional step the images are processed in order to detect changes on the surface of the blades shown on the images. This is preferably achieved by identifying colors on the blade and/or ice accumulation and/or (structural or cosmetic) damages and/or deformations during operation and/or conditions of aero attachments on the blade.

Regarding the color, leading edge protection (LEP) layers can have different color identification with respect to location and with respect to the number of LEP layers. During blade operation based on color exposed one can identify LEP condition with respect to location of blade. Based on this data repair and/or refurbishment actions can be taken.

It is preferred that the detection of changes is used for triggering a repair of the blade, and/or pitch correction of the blade or yaw correction of the machine head and/or identifying blade cleaning cycles. The correction of pitch and/or yaw can especially be triggered by monitoring deformations during operation and/or conditions of aero attachments on the blade.

It is also preferred that also additional objects shown on the image are monitored and are examined similar to the blade. This is especially the spinner, the nacelle and/or the cover or the tower.

Thus, the pictures taken with the method of the invention can be used for various occasions. The image monitoring can be also used for detecting ice accumulation on blades, Spinner, nacelle cover, and tower. The image recognition technique can be also used for identifying the blade structural and cosmetic damages and e.g. also damages on the spinner, the nacelle cover, and the tower. These images can be also used for pitch correction of a blade or yaw correction of the machine head, as well as to identify blade cleaning cycles. In addition, the images can also be used to check the condition of aero attachments on the blade or to check deformations during operation and this data can be used to control the wind turbine.

According to a preferred method, the captured images are automatically analyzed for erosion or deformation of the pictured blade, preferably by comparing digital data of the image with a digital dataset of a reference-blade. It is in particular preferred that a time scale is determined from a predefined dataset or function, when the erosion of the blade will impact the aerodynamic performance of blade. This time scale can be used to plan service intervals or a repair of a blade. It is possible to create a database, where timescales are stored in dependence to the gravity of a damage depending on the area on the blade. The database preferably comprises these timescales and/or threshold limits. This embodiment helps to decide what actions needs to occur based on the captured image processor data and when this action has to occur.

It is preferred that image processing is performed by a machine learning algorithm trained to detect anomalies on the surface of blades. A suitable algorithm could be a "HERMES" algorithm. The solution of the HERMES-algorithm is preferably integrated to Microsoft Azure and infused with Azure AI to process an image recognition. The advantage of using Azure AI services is that this will greatly speed up the process, with image recognition that can stitch images into an accurate model of an entire rotor. AI tools can differentiate blades from water, sky and other irrelevant elements, distinguish cracks and faults from minor impurities (as e.g. bird droppings), integrate the location of the camera and camera zoom data for precise stitching and classifies faults by type and severity.

By using a trained machine-learning algorithm (an AI) implemented in the system (e.g.in the camera), the method is able to take images, use AI tools to classify faults of the blades by type and severity.

It is also preferred that the camera is additionally controlled by the machine learning algorithm. This has the advantage that the camera can take only these images that are required by the AI.

Training the machine-learning algorithm for image recognition is not very complex, since the blades are typically uniform and there is a vast amount of images taken by drones or examiners that can be used for training.

For analyzing the images, the system preferably comprises an analyzation unit with a computer and an image-database or a data interface for data communication with an image-database. The image database is preferably a database or another storage device that includes a plurality of image files of rotor blades, damaged rotor blades, and the like. The analyzation unit is preferably equipped with a memory device which stores various data and/or information and/or code, and a processor for implementing the tasks. One or more software applications are loaded in the memory device of the computing system of the analyzation unit.

In a preferred embodiment, blade damage is automatically identified and categorized based on images captured by the camera. The images captured by the camera are compared with a plurality of images stored on a central database (or analyzed by a machine learning algorithm as described above.

Automatically identifying and categorizing damages preferably includes comparing the images captured by the camera with a plurality of images stored on a central database. For instance, automatic analysis of the blade surface can be made by comparison of the taken photos to a library of predefined perfect blades. Regions of the blade, such as the leading edge can be compared to other damaged leading edges in the photos for identifying rotor blade damage to certain regions of the blade. The digital image files are transferred and automatically integrated into a database, such as HERMES blade database, which provides blade inspection database images and artificial intelligence to automatically identify and categorizes damages.

In a preferred system, the camera is positioned at the tower, at the nacelle or at the spinner, on the rotor system, on a blade of the wind turbine. Alternatively, the camera can also be positioned at an adjacent wind turbine. A camera mounted at the tower, at the nacelle or at an adjacent wind turbine has the advantage that the mounting of the camera is independent from the movement of the blades. A camera mounted at at the spinner, on the rotor system or on a blade has the advantage for some applications that the movement of the camera is synchronous to the movement of the blades. For example, the camera can be placed at any location on a blade, e.g. the tip of the blade. The camera mounted as described above can be used to focus a single blade or multiple blades. The camera can be mounted with and without synchronous motion of the rotor based on requirements for monitoring the blades.

According to a preferred system, the camera has special properties. A preferred camera is a high-resolution camera, having the advantage that small structures and changes of small structures can be seen in the pictures. Alternatively or additionally, the camera serves as aviation light, having the advantage that a control unit controlling the camera can also control the aviation light at the same time. Alternatively or additionally, the camera is designed for recording lightning intensity and relevant information, having the advantage that special impacts on the blades can be monitored independently from the surface of the blades. Alternatively or additionally, the camera is designed for recording noise, having the advantage that possible damage of a blade can be monitored independently from the optical impression.

The invention has the advantage that the blades of a wind turbine can be monitored while in motion so that e.g. online monitoring of a blade leading edge is feasible. Compared with known methods, an active monitoring of the blade leading edge erosion is possible decision can be taken, when this erosion will impact the aerodynamic performance of the blade, which is advantageous for AEP instead of waiting till scheduled maintenance.

Other objects and features of the present invention will become apparent from the following detailed descriptions considered in conjunction with the accompanying drawings. It is to be understood, however, that the drawings are designed solely for the purposes of illustration and not as a definition of the limits of the invention.
FIG. 1 depicts a wind turbine having a camera working in accordance with the present invention,
FIG. 2 shows two wind turbines having a camera working in accordance with the present invention,
FIG. 3 shows a wind turbine having a system in accordance with the present invention,
Figure 4 shows a block diagram of the process flow of a preferred method according to the invention.

In the diagrams, like numbers refer to like objects throughout. Objects in the diagrams are not necessarily drawn to scale.

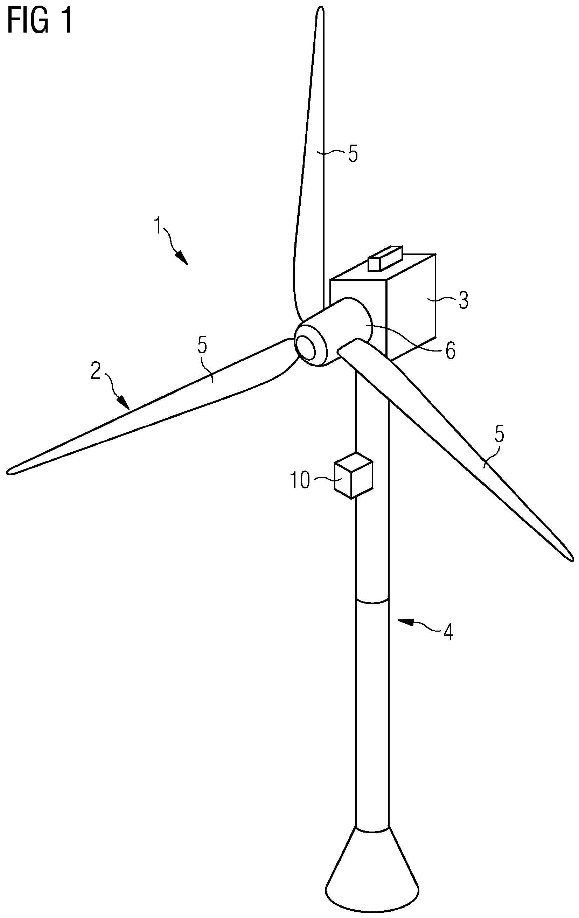

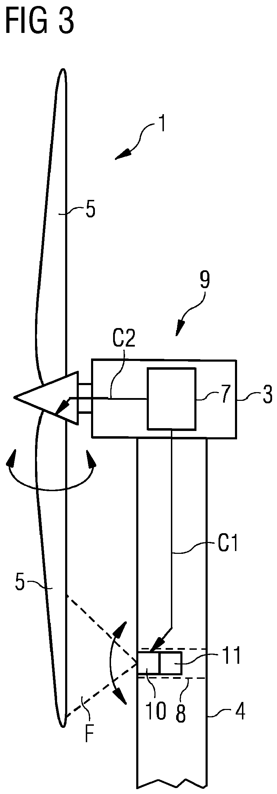

Figure 1 depicts a wind turbine 1 having a camera 10 (or a monitoring system 9 as shown in figure 3), in accordance with embodiments of the present invention. The wind turbine 1 includes one or more rotor blades 5 on a rotor 2 that connect to a hub 6 of the wind turbine 1. The hub 6 is connected to a nacelle 3 that is atop a wind turbine tower 4. The camera 10 is positioned such that it faces a blade 5, if it is right in front of the tower 4 of the wind turbine 1.

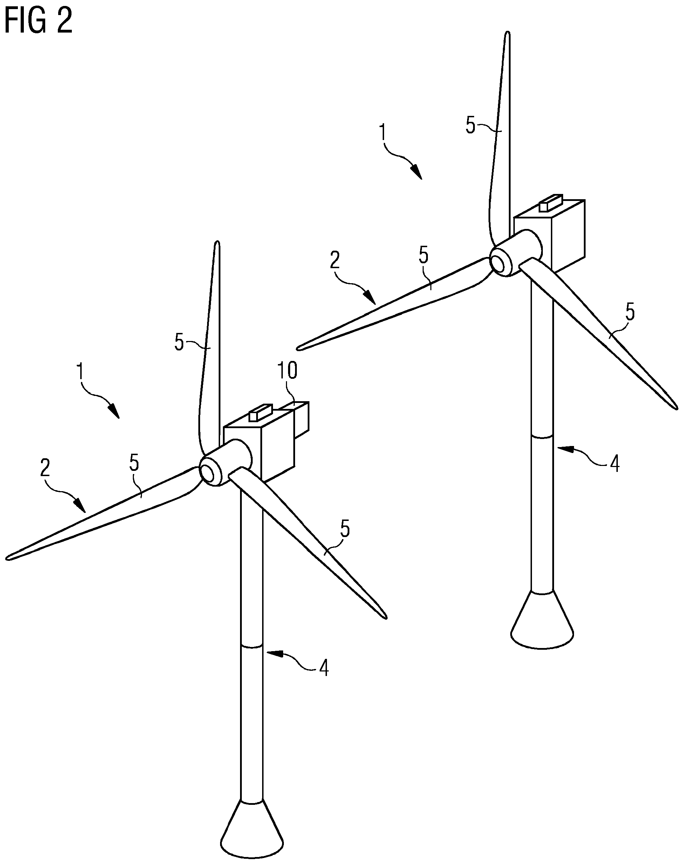

Figure 2 shows two wind turbines 1, wherein the wind turbine 1 on the left of the figure, standing in front of the wind turbine 1 on the right, comprises a camera 10 facing the rotor 2 (i.e. the blades 5) of the wind turbine 1 on the right.

FIG. 3 shows a wind turbine 1 having a system 9 for monitoring the blades 5 of the wind turbine 1 in accordance with the present invention. The wind turbine 1 comprises a camera 10 mounted in a camera slot 8 at the tower 4 such that it faces the blades 5 of the wind turbine 1. The field of view F of the camera 10 is shown with dashed lines and covering an area of about 30% of a blade. The arrows in the field of view indicate that the camera 10 can be tilted by a pan-tilt unit 11 to take an image of another area of the blade 5.

In the nacelle 3 of the wind turbine 1 there is a yaw and/or pitch control system 7 that is typically used to control the pitch of the blades 5 (see e.g. the arrow pointing to the lower blade 5 indicating control data C2 and arrows around the lower blade 5 indicating a change of pitch) or the yaw of the nacelle 3. According to the shown embodiment of the invention, the yaw and/or pitch control system 7 also controls the camera 10 by triggering the taking of an image at a point of time where a blade 5 is right in front of the camera 10. Also, the tilting of the camera 10 can be controlled by the yaw and/or pitch control system 7 in that it controls the pan-tilt unit 11. This controlling is indicated by an arrow pointing to the camera 10 showing the flow of control signals C1.

Thus, the yaw and/or pitch control system 7 acts as a control unit 7 designed to control the camera 10 to capture a number of images P of a blade 5 while the blade 5 is in motion, wherein the camera 10 is adjusted and controlled such that each image P of the number of images P shows a predefined area of a blade 5 in a predefined area of the image P.

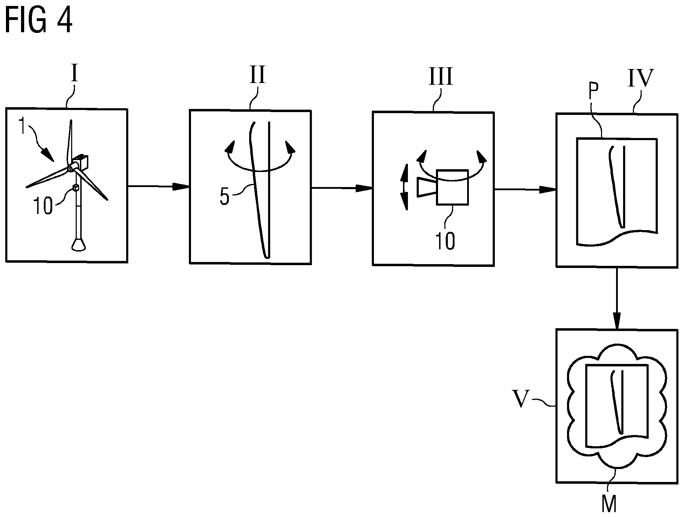

Figure 4 shows a block diagram of the process flow of a preferred method for monitoring the blades 5 of a wind turbine 1, according to the invention.

In step I, a camera 10 is provided on a wind turbine (see e.g. figures 1 to 3) facing the blades 5 of the wind turbine 1.

In step II, the pitch of a blade is controlled by the yaw and/or pitch control system 7 such that it shows the leading edge to the camera 10. This can be performed right before the blade 5 enters the field of view F of the camera 10 (see e.g. figure 3) and be reversed after the image P is taken.

In step III, the position of the camera 10 is adjusted (e.g. by a pan-tilt unit 11) triggered by the yaw and/or pitch control system 7 of the wind turbine 1, in order to optimize the viewing angle.

The steps II and III could be performed alternatively or in combination. They could be replaced by a triggering of a (static) camera by the yaw and/or pitch control system 7 in that it takes a picture at a point of time when a blade 5 is right before the camera. Steps II and III (or the alternative step) should ensure that the camera 10 is adjusted and controlled such that each image P of the number of images P shows a predefined area of a blade 5 in a predefined area of the image P.

In step IV, an image P of a blade 5 is captured with the camera 10 while the blade 5 is in motion.

In step V, this image is analyzed by a machine learning algorithm M in order to detect anomalies on the surface of the blade 5

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The mention of a "unit" or a "device" does not preclude the use of more than one unit or device.

## Claims

1. A method for monitoring the blades (5) of a wind turbine (1), comprising the steps:
- providing a camera (10) facing the blades (5) of the wind turbine (1),
- capturing with the camera (10) a number of images (P) of a blade (5) while the blade (5) is in motion, wherein the camera (10) is adjusted and controlled such that each image (P) of the number of images (P) shows a predefined area of a blade (5) in a predefined area of the image (P) .

2. The method according to claim 1, wherein the camera (10) captures an image (P) of the leading edge of at least one blade (5) of the wind turbine (1), preferably a series of pictures (P) of all blades (5) of the wind turbine (1), particularly preferably at several points of time.

3. The method according to one of the preceding claims, wherein before capturing an image (P), the camera (10) and/or the blade (5) is positioned such that a predefined part of the blade (5) is visible on the image (P),
preferably wherein the camera (10) is mounted on a motion-unit designed to move the camera (10), especially by a pan-tilt unit (11) with two degrees of freedom.

4. The method according to one of the preceding claims, wherein the positioning of the camera (10) and/or the capturing of an image (P) is triggered or controlled by a yaw and/or pitch control system (7) of the wind turbine (1), wherein preferably the camera rotation motion is controlled by the yaw and/or pitch control system (7).

5. The method according to one of the preceding claims, wherein the camera (10) captures an image (P) while a predefined area of the blade (5), preferably the blade leading edge, is pitched to a predefined angle focusing on the camera (10), especially by a yaw and/or pitch control system (7) of the wind turbine (1).

6. The method according to one of the preceding claims, wherein the camera (10) is mounted and designed such that at least 30% span of a blade (5) can be pictured with one image (P), or
wherein the camera (10) is preferably controlled such that at least a vertical camera motion is applied between two images (P), wherein the vertical motion is preferably applied such that at last 30% span of a blade (5) can be captured with a number of images (P).

7. The method according to one of the preceding claims, wherein in an additional step the images (P) are processed in order to detect changes on the surface of the blades (5) shown on the images (P),
preferably wherein colors on the blade (5) and/or ice accumulation and/or damages and/or deformations during operation and/or conditions of aero attachments on the blade (5) are identified,
preferably wherein the detection of changes is used for
- triggering a repair of the blade (5),
- pitch correction of the blade (5) and/or yaw correction of the machine head,
- identifying blade cleaning cycles,
wherein preferably also additional objects shown on the image, especially the spinner, the nacelle (3), the cover or the tower (4) are examined similar to the blade (5).

8. The method according to one of the preceding claims, wherein the captured images (P) are automatically analyzed for erosion or deformation of the pictured blade (5), preferably by comparing digital data of the image (P) with a digital dataset of a reference-blade,
in particular preferably wherein a time scale is determined from a predefined dataset or function, when the erosion of the blade (5) will impact the aerodynamic performance of blade (5).

9. A system (9) for monitoring the blades (5) of a wind turbine (1), comprising:
- a camera (10) mounted such that it faces the blades (5) of the wind turbine (1),
- a control unit (7) designed to control the camera (10) to capture a number of images (P) of a blade (5) while the blade (5) is in motion, wherein the camera (10) is adjusted and controlled such that each image (P) of the number of images (P) shows a predefined area of a blade (5) in a predefined area of the image (P).

10. The system according to claim 9, wherein the control unit (7) comprises or is the yaw and/or pitch control system (7) of the wind turbine (1).

11. The system according to one of claims 9 or 10, wherein the camera (10) is positioned at the tower (4), at the nacelle (3) or at the spinner, on the rotor (2) or on a blade (5) of the wind turbine (1) or at an adjacent wind turbine (1).

12. The system according to one of claims 9 to 11, wherein the camera (10) is a high-resolution camera and/or serves as aviation light, and/or is designed for recording lightning intensity and relevant information and/or is designed for recording noise.

13. A wind turbine (1) comprising a camera (10), wherein the wind turbine (1) is designed to perform a method according to one of claims 1 to 8 and/or comprises a system (9) according to one of claims 9 to 12.

14. A computer program product comprising a computer program that is directly loadable into a system (9) for monitoring the blades (5) of a wind turbine (1) or into a control unit (7) of a wind turbine (1), which comprises program elements for performing steps of the method according to any of claims 1 to 8 when the computer program is executed by the system (9) or the control unit (7).

15. A computer-readable medium on which program elements are stored that can be read and executed by a computer unit in order to perform steps of the method according to any of claims 1 to 8 when the program elements are executed by the computer unit.
